(19) **Europäisches Patentamt**

**European Patent Office**

**Office européen des brevets**

(11) Veröffentlichungsnummer: **0 311 756 B1**

(12) ## EUROPÄISCHE PATENTSCHRIFT

(45) Veröffentlichungstag der Patentschrift: **06.11.91**

(51) Int. Cl.⁵: **B60K 15/04**

(21) Anmeldenummer: **88111510.9**

(22) Anmeldetag: **18.07.88**

(54) Einfüllstutzen für einen Kraftstoffbehälter eines Kraftfahrzeugs.

(30) Priorität: **14.10.87 DE 3734782**

(43) Veröffentlichungstag der Anmeldung:
**19.04.89 Patentblatt 89/16**

(45) Bekanntmachung des Hinweises auf die
Patenterteilung:
**06.11.91 Patentblatt 91/45**

(84) Benannte Vertragsstaaten:
**DE ES FR GB IT SE**

(56) Entgegenhaltungen:
**EP-A- 0 210 322**
**DE-A- 3 027 002**
**US-A- 4 185 844**

(73) Patentinhaber: **Dr.Ing.h.c. F. Porsche Aktiengesellschaft
Porschestrasse 42
W-7000 Stuttgart 40(DE)**

(72) Erfinder: **Götz, Erwin
Beethovenstrasse 5
W-7252 Weil der Stadt 2(DE)**
Erfinder: **Anhegger, Sigmund
Keltenstrasse 10
W-7253 Renningen(DE)**
Erfinder: **Österle, Josef, Dipl.-Ing.FH
Riegestrasse 8
W-7901 Rammingen(DE)**

EP 0 311 756 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen Einfüllstutzen für einen Kraftstoffbehälter eines Kraftfahrzeugs, der an seinem deckelseitigen Ende mit einem zylindrischen Einsatz versehen ist, wobei zwischen einer äußeren Mantelfläche des Einsatzes und einer inneren Mantelfläche des aus Kunststoff gefertigten Einfüllstutzens ein elastischer Dichtring angeordnet ist.

Bei einer bekannten Anordnung der eingangs genannten Gattung (EP-A-0 210 322) ist in einen vorgefertigten, hohlzylindrischen Ansatz des aus Kunststoff bestehenden Einfüllstutzens ein aus Metall gefertigter Einsatz eingeführt, wobei zur axialen Fixierung des Einsatzes nachträglich eine Bördelverbindung zwischen Einsatz und Einfüllstutzen erfolgt. Ferner ist zwischen einer äußeren Mantelfläche des Einsatzes und einer inneren Mantelfläche des Einfüllstutzens ein elastischer Dichtring eingespannt, der durch einen O-Ring gebildet wird.

Dieser Anordnung haftet der Nachteil an, daß zur Verbindung von Einfüllstutzen und Einsatz mehrere zeit- und kostenintensive Arbeitsgänge erforderlich sind, wodurch die Herstellungskosten erhöht werden. Außerdem muß zur axialen Festlegung des O-Rings am Einsatz eine Ringnut vorgesehen werden, da sich der O-Ring sonst in axialer Richtung verschieben würde.

Aufgabe der Erfindung ist es, eine einfache kostengünstige Verbindung zwischen dem Einsatz und dem Einfüllstutzen zu schaffen. Darüber hinaus soll eine funktionsgerechte Abdichtung zwischen Einsatz und Einfüllstutzen gewährleistet sein.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch den unter Vorspannung auf den Einsatz aufgesetzten profilierten, länglichen Dichtring eine selbsttätige Befestigung für den Dichtring in axialer Richtung erreicht wird. Durch das gemeinsame Umblasen des Einsatzes und des Dichtringes wird eine einfache kostengünstige Verbindung zwischen Einsatz und Einfüllstutzen erzielt. Die an der inneren Mantelfläche des Dichtringes vorgesehenen Rillen sorgen dafür, daß sich der Dichtring nicht auf der äußeren Mantelfläche des Einsatzes verschieben kann. Die an der äußeren Mantelfläche des Dichtringes ausgebildeten Querschnittserweiterungen bewirken eine gute formschlüssige Verbindung zwischen Dichtring und Einfüllstutzen. Sollte Kraftstoff zum Dichtring gelangen, so quillt der aus Gummi oder Kunststoff gefertigte Dichtring auf, und die Abdichtung zwischen Einsatz und Einfüllstutzen wird zusätzlich verbessert. Durch die flache längliche Form des Dichtringes wird erreicht, daß er auch bei den im Blasverfahren auftretenden, relativ hohen Drücken sicher in Lage gehalten wird. Eine zusätzliche Sicherung des Dichtrings in axialer Richtung wird dadurch erzielt, daß am Einsatz örtlich radiale Ausbuchtungen vorgesehen sind, auf die der Dichtring aufgesetzt ist.

Ein Ausführungsbeispiel der Erfindung ist in der Zeichnung dargestellt und wird im folgenden näher erläutert.
Es zeigt

Fig. 1     einen Längsschnitt durch einen Einfüllstutzen eines Kraftstoffbehälters,

Fig. 2     den Dichtring gemäß Fig. 1, teilweise im Schnitt und in größerem Maßstab,

Fig. 3     einen Längsschnitt entsprechend Fig. 1 einer weiteren Ausführungsform eines Einfüllstutzens,

Fig. 4     der Dichtring gemäß Fig. 3, teilweise im Schnitt und in größerem Maßstab.

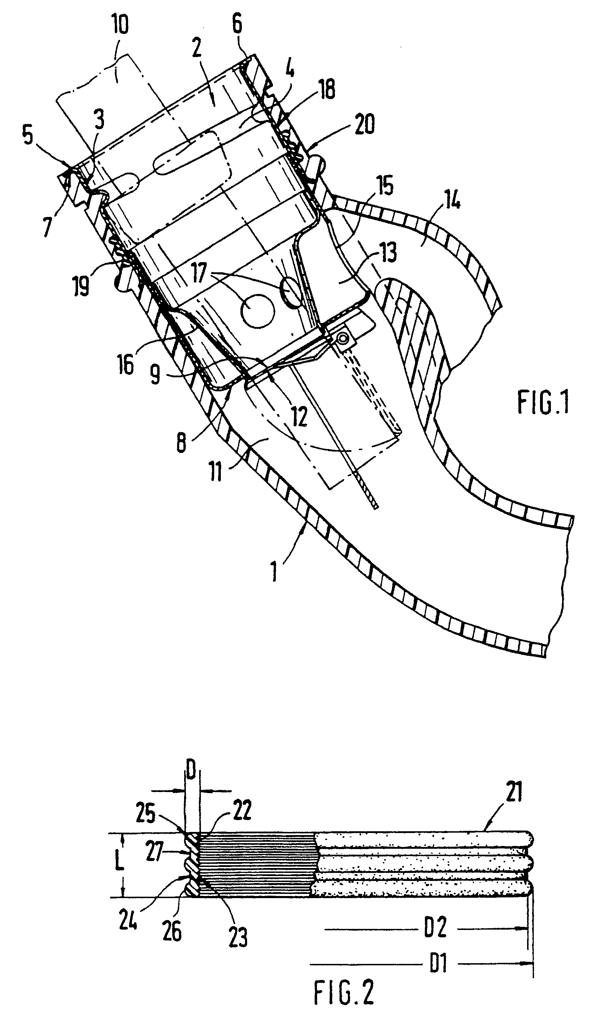

Fig. 1 zeigt einen Teilbereich eines aus Kunststoff gefertigen Einfüllstutzens 1, dessen eines Ende mit einem nicht dargestellten Kraftstoffbehälter eines Kraftfahrzeuges verbunden ist. Das andere, entfernt vom Kraftstoffbehälter liegende Ende 2 des Einfüllstutzens 1 ist mit einem zylindrisch ausgebildeten Einsatz 3 versehen, der einen nicht gezeigten Verschlußdeckel aufnimmt. Der vorzugsweise aus Metall hergestellte Einsatz 3 weist innenseitig einen Gewindegang 4 auf, der mit einem Außengewinde des Verschlußdeckels zusammenwirkt.

Gemäß Fig. 1 weist der Einsatz 3 an seinem obenliegenden, offenen Ende 5 einen nach außen gerichteten Kragen 6 auf, der sich abschnittsweise an einer Stirnseite 7 des Einfüllstutzens 1 abstützt. Ein untenliegender Bodenabschnitt 8 des Einsatzes 3 verschließt mit Ausnahme einer Durchführöffnung 9 für eine strichpunktiert dargestellte Zapfpistole 10 den zum Kraftstoffbehälter führenden Rohrabschnitt 11 des Einfüllstutzens 1, wobei die Durchführöffnung 9 mit einer verschwenkbaren, federbelasteten Klappe 12 versehen ist.

Der mehrteilig ausgebildete Einsatz 3 weist oberhalb der Durchführöffnung 9 einen Ringraum 13 auf, der mit einer Entlüftungsleitung 14 des Einfüllstutzens 1 in Verbindung steht. Die Entlüftungsleitung 14 ist seitlich an den Einfüllstutzen 1 und eine Öffnung 15 des Ringraumes 13 angeschlossen. An einer inneren, den Ringraum 13 bildenden, konischen Wand 16 sind mehrere Durchbrüche 17 angeordnet, durch die die Luft in Richtung Verschlußdeckel strömen kann.

Oberhalb des Ringraumes 13 ist zwischen einer äußeren Mantelfläche 18 des Einsatzes 3 und einer inneren Mantelfläche 19 eines endseitigen, hohlzylindrischen Abschnittes 20 des Einfüllstutzens 1 ein elastischer Dichtring 21 angeordnet.

Entsprechend den Fig. 1 und 2 ist der profilierte. eine längliche Querschnittsform aufweisende Dichtring 21 an beliebiger Stelle unter Vorspannung auf die äußere Mantelfläche 18 des Einsatzes 3 aufgesetzt. Der Einsatz 3 ist zusammen mit dem Dichtring 21 durch Umblasen formschlüssig mit dem außenliegenden, hohlzylindrischen Abschnitt 20 des Einfüllstutzens 1 verbunden. Das geschieht in der Weise, daß der Einsatz 3 mit dem aufgesteckten Dichtring 21 in eine Blasform eingelegt und anschließend umblasen wird, so daß der Einfüllstutzen 1 abschnittsweise den Einsatz 3 und den Dichtring 21 umschließt. Die radiale Pressung des Dichtringes 21 wird durch das Umblasen erreicht.

Der aus geeignetem Werkstoff wie Gummi oder Kunststoff gefertigte Dichtring 21 weist an seiner inneren Mantelfläche mehrere aneinandergesetzte Rillen 23 auf. Die radial verlaufenden Rillen 23 sind - im Querschnitt gesehen - sägezahnartig ausgebildet. Gemäß Fig. 2 sind die Rillen 23 entlang der gesamten Länge L des Dichtringes 21 angeordnet. Durch die eine geringe Höhe aufweisenden Rillen 23 und die flache längliche Form des Dichtringes 21 wird ein axiales Verschieben des Dichtringes 21 während des Blasvorganges verhindert. An seiner äußeren Mantelfläche weist der Dichtring 21 örtlich Querschnittserweiterungen 25 auf. Entsprechend Fig. 2 sind drei mit Abstand zueinander angeordnete, halbkreisförmige Querschnittserweiterungen 25 vorgesehen. Die Querschnittserweiterungen 25 werden durch halbkreisförmige Wülste 26 gebildet. Es besteht aber auch die Möglichkeit, daß die Wülste 26 wellenförmig, dreieckförmig, rechteckig oder dergleichen ausgebildet sind. Zwischen zwei nebeneinanderliegenden Wülsten 26 ist jeweils ein zylindrischer Verbindungsbereich 27 vorgesehen, wobei der Verbindungsbereich 27 einen Außendurchmesser D2 aufweist, der kleiner ist als der Außendurchmesser D1 der Wülste 26. Das Verhältnis der Länge L zur maximalen Dicke D des Dichtringes 21 beträgt etwa 2,5 : 1 bis 5 : 1, d. h., Die Länge des Dichtringes 21 ist etwa 2,5 bis 5mal so groß wie seine maximale Dicke. Wenn Kraftstoff in den Spaltbereich zwischen Einsatz 3 und Einfüllstutzen 1 hindurchtritt und zum Dichtring 21 gelangt, quillt dieser auf und bewirkt eine verbesserte Abdichtung, so daß kein Kraftstoff über den Dichtring 21 hinweg ins Freie austreten kann.

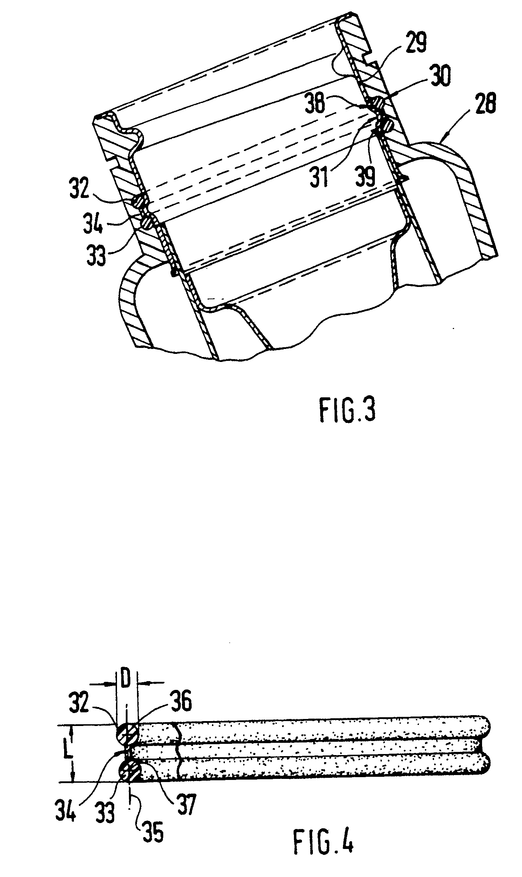

Fig. 3 zeigt eine zweite Ausführungsform eines Einfüllstutzens 28, wobei an einem Einsatz 29 im Bereich eines Dichtrings 30 örtlich radiale Ausbuchtungen 31 vorgesehen sind, die eine zusätzliche axiale Fixierung des Dichtringes 30 bewirken.

Die Ausbuchtungen 31 sind kalottenförmig ausgebildet. Der mit den Ausbuchtungen 31 zusammenwirkende Dichtring 30 setzt sich - im Querschnitt gesehen - aus zwei endseitigen, kreisförmigen Abschnitten 32, 33 zusammen, die über einen dünnwandigen Steg 34 miteinander verbunden sind. Der Steg 34 verläuft im Bereich einer Hilfsebene 35, die die übereinanderliegenden Mittelpunkte 36, 37 der kreisförmigen Abschnitte 32, 33 miteinander verbindet.

Die kalottenförmigen Ausbuchtungen 31 weisen eine solche Größe auf, daß sich die beabstandeten kreisförmigen Abschnitte 32, 33 des Dichtringes 30 abschnittsweise an den gegenüberliegenden Auslaufradien 38, 39 abstützen. Der Steg 34 beult sich durch die Ausbuchtungen 31 örtlich nach außen hin aus.

## Patentansprüche

1. Einfüllstutzen für einen Kraftstoffbehälter eines Kraftfahrzeugs, der an einem deckelseitigen Ende mit einem zylindrischen Einsatz (3, 29) versehen ist, wobei zwischen einer äußeren Mantelfläche (18) des Einsatzes und einer inneren Mantelfläche (19) des aus Kunststoff bestehenden Einfüllstutzens ein elastischer Dichtring angeordnet ist, dadurch gekennzeichnet, daß der Dichtring (21, 30) eine profilierte, längliche Querschnittsform aufweist und unter Vorspannung auf den Einsatz (3, 29) aufgesetzt ist und daß der Dichtring (21, 30) und der Einsatz (3, 29) durch den außenliegenden Einfüllstutzen (18) fixiert sind.

2. Einfüllstutzen nach Anspruch 1, dadurch gekennzeichnet, daß der Dichtring (21) an seiner inneren Mantelfläche mehrere aneinandergesetzte Rillen (23) aufweist.

3. Einfüllstutzen nach Anspruch 2, dadurch gekennzeichnet, daß die radial verlaufenden Rillen (23) - im Querschnitt gesehen - sägezahnartig ausgebildet sind.

4. Einfüllstutzen nach Anspruch 1, dadurch gekennzeichnet, daß der Dichtring (21) an seiner äußeren Mantelfläche (24) örtlich Querschnittserweiterungen (25) aufweist.

5. Einfüllstutzen nach Anspruch 4, dadurch gekennzeichnet, daß die Querschnittserweiterungen (25) durch halbkreisförmige Wülste (26) gebildet werden.

6. Einfüllstutzen nach Anspruch 4, dadurch gekennzeichnet, daß zwischen zwei nebeneinanderliegenden Wülsten (26) ein zylindrischer Verbindungsbereich (27) mit einem kleineren Außendurchmesser vorgesehen ist.

7. Einfüllstutzen nach Anspruch 1, dadurch gekennzeichnet, daß das Verhältnis der Länge zur maximalen Dicke des Dichtringes (21. 30) etwa 2,5 : 1 bis 5 : 1 beträgt.

8. Einfüllstutzen nach Anspruch 1, dadurch gekennzeichnet, daß sich der längliche Dichtring (30) aus zwei endseitigen - im Querschnitt gesehen - kreisförmigen Abschnitten (32, 33) zusammensetzt, die über einen dünnwandigen Steg (34) miteinander verbunden sind.

9. Einfüllstutzen nach den Anspruchen 1 und 8, dadurch gekennzeichnet, daß am Einsatz (29) örtlich radiale Ausbuchtungen (31) vorgesehen sind, auf die der Dichtring (30) aufgesetzt ist, wobei sich die kreisförmigen Abschnitte (32, 33) des Dichtrings (30) an der Ausbuchtung (31) abstützen.

10. Einfüllstutzen nach Anspruch 9, dadurch gekennzeichnet, daß die nach außen ragenden Ausbuchtungen (31) kalottenförmig ausgebildet sind, wobei die Ausbuchtungen (31) dergestalt geformt sind, daß die endseitigen, kreisförmigen Abschnitte (32, 33) des Dichtringes (30) abschnittsweise an den Auslaufradien (38, 39) der Ausbuchtungen (31) anliegen.

11. Verfahren zur Herstellung eines Einfüllstutzens nach den Ansprüchen 1 bis 10, dadurch gekennzeichnet, daß nach dem Aufsetzen des Dichtringes (21, 30) auf den Einsatz (3, 29) letzterer in ein Blaswerkzeug eingelegt und über eine Halterung fixiert wird und daß anschließend ein gemeinsames Umblasen des Einsatzes (3, 29) und des Dichtringes (21, 30) erfolgt.

## Claims

1. A filling socket for a fuel tank of a motor vehicle, provided with a cylindrical insert (3, 29) at one end towards the cap, a resilient sealing ring being interposed between an external surface (18) of the insert and an internal surface (19) of the filling socket which consists of plastics material, characterized in that the sealing ring (21, 30) has a profiled, elongate cross-sectional shape and is positioned on the insert (3, 29) with pre-tensioning, and the sealing ring (21, 30) and the insert (3, 29) are fixed by the filling socket (18) [*sic*] situated on the outside.

2. A filling socket according to Claim 1, characterized in that the sealing ring (21) is provided on its internal surface with a plurality of adjacent grooves (23).

3. A filling socket according to Claim 2, characterized in that the radially extending grooves (23) are constructed in a serrated manner when viewed in cross-section.

4. A filling socket according to Claim 1, characterized in that the sealing ring (21) is provided locally on its external generated surface (24) with cross-sectional enlargements (25).

5. A filling socket according to Claim 4, characterized in that the cross-sectional enlargements (25) are formed by semi-circular beads (26).

6. A filling socket according to Claim 4, characterized in that a cylindrical connexion area (27) with a smaller external diameter is provided between two adjacent beads (26).

7. A filling socket according to Claim 1, characterized in that the ratio of the length to the maximum thickness of the sealing ring (21, 30) amounts to substantially from 2.5 : 1 to 5 : 1.

8. A filling socket according to Claim 1, characterized in that the elongate sealing ring (30) is formed by two portions (32, 33) at the end, which are circular when viewed in cross-section and which are connected together by a thin-walled web (34).

9. A filling socket according to Claims 1 and 8, characterized in that radial bulges (31), on which the sealing ring (30) is placed, are provided locally on the insert (29), the circular portions (32, 33) of the sealing ring (30) being supported on the bulge (31).

10. A filling socket according to Claim 9, characterized in that the outwardly projecting bulges (31) are made cup-shaped, the bulges (31) being shaped in such a way that the circular portions (32, 33) at the ends of the sealing ring (30) rest in part on the end radii (38, 39) of the bulges (31).

11. A method of producing a filling socket according to Claims 1 to 10, characterized in that after the sealing ring (21, 30) has been placed on the insert (3, 29) the latter is inserted in a blowing tool and is fixed by way of a holding means, and then the insert (3, 29) and the sealing ring are jointly subjected to blowing therearound.

## Revendications

1. Tuyauterie ou goulotte de remplissage pour un réservoir de carburant d'un véhicule automobile, qui est pourvue à une extrémité côté couvercle d'un accessoire cylindrique (3, 29), une bague d'étanchéité élastique étant placée entre une surface d'enveloppe extérieure (18) de l'accessoire et une surface d'enveloppe intérieure (19) de la goulotte en matière plastique, caractérisée en ce que la bague d'étanchéité (21, 30) présente une section transversale profilée, allongée et est placée sous précontrainte sur l'accessoire (3, 29) et en ce que la bague d'étanchéité (21, 30) et l'accessoire (3, 29) sont fixés par la goulotte (18) située à l'extérieur.

2. Tuyauterie de remplissage selon la revendication 1, caractérisée en ce que la bague d'étanchéité (21) présente sur sa surface d'enveloppe intérieure plusieurs cannelures (23) juxtaposées.

3. Tuyauterie de remplissage selon la revendication 2, caractérisée en ce que les cannelures (23) s'étendant radialement - vues en coupe transversale - sont en dents de scie.

4. Tuyauterie de remplissage selon la revendication 1, caractérisée en ce que la bague d'étanchéité (29) présente par endroits des élargissements de section transversale (25), sur sa surface d'enveloppe extérieure (24).

5. Tuyauterie de remplissage selon la revendication 4, caractérisée en ce que les élargissements de section transversale (25) sont formés par des bourrelets (26) semi-circulaires.

6. Tuyauterie de remplissage selon la revendication 4, caractérisée en ce qu'il est prévu, entre deux bourrelets (26) juxtaposés, une zone de liaison cylindrique (27) de diamètre extérieur réduit.

7. Tuyauterie de remplissage selon la revendication 1, caractérisée en ce que le rapport de la longueur à l'épaisseur maximale de la bague d'étanchéité (21, 30) est d'environ 2,5 : 1 à 5 : 1.

8. Tuyauterie de remplissage selon la revendication 1, caractérisée en ce que la bague d'étanchéité (30) allongée est constituée de deux parties circulaires (32, 33) terminales - vues en coupe transversale - qui sont assemblées entre elles par une barrette (34) à paroi mince.

9. Tuyauterie de remplissage selon les revendications 1 et 8, caractérisée en ce qu'il est prévu sur l'accessoire (29), des parties creuses (31) radiales sur lesquelles est placée la bague d'étanchéité (30), les parties circulaires (32, 33) de la bague d'étanchéité (30) prenant appui contre la partie creuse (31).

10. Tuyauterie de remplissage selon la revendication 9, caractérisée en ce que les parties creuses (31) dépassant vers l'extérieur sont en forme de calottes, les parties creuses (31) ayant une forme telle que les parties circulaires (32, 33) terminales de la bague d'étanchéité (30) s'appliquent par endroits contre les rayons de sortie des parties creuses (31).

11. Procédé de fabrication d'une tuyauterie de remplissage selon les revendications 1 à 10, caractérisée en ce qu'après mise en place de la bague d'étanchéité (21, 30) sur l'accessoire (3, 29), ce dernier est placé dans un outil de soufflage et est fixé, par une fixation, et en ce qu'ensuite on procède à un moulage commun par soufflage de l'accessoire (3, 29) et de la bague d'étanchéité (21, 30).

FIG.1

FIG.2

6

FIG.3

FIG.4

7